# EUROPEAN PATENT APPLICATION

(11) **EP 2 784 580 A1**
(43) Date of publication of application: **01.10.2014**
(21) Application number: 14159729.4
(22) Date of filing: 14.03.2014
(51) Int. Cl.: G03B 21/16, G03B 21/20, G02B 27/01, G03B 33/12

(54) **Projector and head-up display device**

(30) Priority: 29.03.2013 JP 2013071304; 29.03.2013 JP 2013071306
(71) Applicant: Funai Electric Co., Ltd., Daito city Osaka 574-0013 (JP)
(72) Inventor: Shimizu, Daisuke, Osaka Osaka 574-0013 (JP); Takahashi, Yutaka, Osaka Osaka 574-0013 (JP)
(74) Representative: Osha Liang SARL

(57) **Abstract**

A projector (1) comprises a cooling unit (14a, 14b, 14c) that is disposed so as to face an inner side of a housing (10) and that comprises a cooling plane (1421c) configured to cool to a temperature lower than the housing (10), a light emitting element (11a, 11b, 11c) that is disposed in the housing (10), configured to emit a light beam, that enables an adjustment of a position and a tilt of an optical axis, and that comprises an outer plane where an angle relative to the cooling plane (1421c) of the cooling unit (14a, 14b, 14c) is fixed even when displaced by the adjustment, and a heat transfer member (146a, 146b, 146c) that is in surface contact with and thermally connected to the cooling plane (1421c) of the cooling unit (14a, 14b, 14c) and the outer plane of the light emitting element (11a, 11b, 11c).

## Description

### BACKGROUND

### Technical Field

The present invention relates generally to a projector and head-up display device.

### Related Art

Among devices such as a projector or a head-up display device, there are those mounted with a laser module using, for example, laser diodes as light sources for projecting video onto a screen. Performance of the laser diodes is temperature dependent and significantly impaired at high temperatures. Because of this, a cooler for cooling the laser diodes that generates heat along with light is often attached on the laser module. A conventional cooling structure relating to the cooling of such a heating element is disclosed, for example, in Japanese Unexamined Patent Application Publication No. H10-70222.

The cooling structure of a conventional mounted component described in Japanese Unexamined Patent Application Publication No. H10-70222 is a structure that brings a heat sink into contact with a semiconductor element to cool the latter, which is the heating element. The structure uses a flat spring or an elastic member to press the heat sink toward the semiconductor element from a horizontal and vertical direction relative to the semiconductor element. This is an attempt to improve cooling performance by strengthening the bond between the semiconductor element and the heat sink.

Furthermore, a conventional optical module described in Japanese Unexamined Patent Application Publication No. 2001-168447 provides Peltier elements to cool a package that houses optical module parts inside and the laser diodes. The package has a sealed structure to prevent deposition of condensation water due to cooling on the optical module parts of the laser diodes and the like. A bottom plate or the like of the package that is between the laser diodes and the Peltier elements is formed from an alloy of copper or aluminum, which have comparatively high thermal conductivity. Because of this, heat generated by the laser diodes due to light generation can be released outside efficiently.

However, further improvements in performance or manufacturing efficiency are sought in the conventional optical module described above.

### SUMMARY

According to one or more embodiments, a projector may comprise a cooling unit that is disposed so as to face an inner side of a housing and that comprises a cooling plane configured to cool to a temperature lower than the housing, a light emitting element that is disposed in the housing, configured to emit a light beam, that enables an adjustment of a position and a tilt of an optical axis, and that comprises an outer plane where an angle relative to the cooling plane of the cooling unit is fixed even when displaced by the adjustment, and a heat transfer member that is in surface contact with and thermally connected to the cooling plane of the cooling unit and the outer plane of the light emitting element.

In one or more embodiments, the light emitting element may be a laser diode.

In one or more embodiments, the cooling unit comprises a Peltier element.

According to this configuration, for example, the heat transfer member may be continuously in surface contact with the cooling plane of the cooling unit and the outer plane of the light emitting element even when displacing the light emitting element for optical axis adjustment by following the displacement. That is, the light emitting element and the cooling unit may be continuously thermally connected via the heat transfer member. Therefore, for example, forming the heat transfer member from a material with comparatively high thermal conductivity such as metal and the like allows transfer of heat between the light emitting element of the projector and the cooling unit to be performed efficiently. Other members such as grease may be interposed between the light emitting element and the heat transfer member and between the heat transfer member and the cooling unit.

In one or more embodiments, the projector may comprise a pressing unit configured to press the heat transfer member toward the light emitting element.

According to this configuration, for example, an effect of the heat transfer member being in surface contact with the outer plane of the light emitting element may be heightened. That is, thermal connectivity may improve between the light emitting element and the cooling unit. Therefore, for example, efficiency of passing heat between the light emitting element and the cooling unit is further improved.

In one or more embodiments, the pressing unit may comprise: a spring that is disposed across from the light emitting element inside the housing with the heat transfer member therebetween and that can elastically displace by protruding toward the inner side from an inner surface of the housing; and a contact piece disposed on the heat transfer member, that protrudes toward and contacts the spring.

According to this configuration, for example, an effect of the heat transfer member being in surface contact with the outer plane of the light emitting element may be heightened with a simple and easy configuration. Therefore, for example, efficiency of passing heat between the light emitting element and the cooling unit can be easily improved.

In one or more embodiments, the pressing unit may comprise a plurality of pairs of springs and contact pieces.

According to this configuration, for example, a following property of the heat transfer member relative to the displacement of the light emitting element that accompanies optical axis adjustment may improve. Therefore, for example, thermal connectivity between the light emitting element and the cooling unit may also improve.

In one or more embodiments, the cooling unit may comprise a heat conducting member having the cooling plane, wherein the Peltier element cools the heat conducting member from outside the housing.

According to this configuration, for example, even if the cooling unit has a configuration that provides the heat conducting member and the cooler, transfer of heat between the light emitting element and the cooling unit can be performed efficiently.

Furthermore, one or more embodiments of the above-describe projector may be provided in a head-up display device.

According to this configuration, for example, in the head-up display device, the heat transfer member may be continuously in surface contact with the cooling plane of the cooling unit and the outer plane of the light emitting element even when displacing the light emitting element for optical axis adjustment by following the displacement. Therefore, for example, forming the heat transfer member from a material with comparatively high thermal conductivity such as metal and the like may allow transfer of heat between the light emitting element of the head-up display device and the cooling unit to be performed efficiently.

In one or more embodiments, a projector may comprise: a cooling unit that is disposed so as to face an inner side of a housing and that comprises a cooling plane that cools to a temperature lower than the housing; a light emitting element that is disposed in the housing, configured to emit a light beam, that enables an adjustment of a position and a tilt of an optical axis, and that comprises an outer plane where an angle relative to the cooling plane of the cooling unit is fixed even when displaced by the adjustment; a heat transfer member; and a heat conducting member that is disposed in an opening in the housing via a sealing member, that connects thermally to the light emitting element at a portion positioned on an inner side of the housing, and that is formed from a material with higher thermal conductivity than the housing, wherein the heat conducting member is thermally connected to the light emitting element and formed from a material with higher thermal conductivity than the housing, and the heat conducting member has a low temperature portion positioned on the inner side of the housing having a locally lower temperature.

In one or more embodiments, the light emitting element may be a laser diode.

In one or more embodiments, the cooling unit comprises a Peltier element.

According to this configuration, for example, the housing may be sealed by a simple and easy configuration that fits the heat conducting member to the opening of the housing via the sealing member. The light emitting element may then be cooled by the cooler via the heat conducting member. Even if condensation occurs on a portion of the heat conducting member on the inner side of the housing, condensation water forms on the low temperature portion. Because the low temperature portion does not contact the light emitting element, deposition of condensation water on the light emitting element of the projector can be prevented. Other members such as grease may be interposed between the light emitting element and the heat transfer member.

In one or more embodiments, a distance from the low temperature portion to an opposing surface of the Peltier element is shorter than a distance to an opposing surface of a periphery of the housing.

According to this configuration, for example, thermal resistance decreases for a portion of the low temperature portion and temperature may easily become lower locally compared to the periphery. Therefore, for example, condensation may occur more easily on the low temperature portion than the periphery thereof.

In one or more embodiments, the low temperature portion is formed by a concave portion recessed toward the opposing surface of the Peltier element from a surface positioned on the inner side of the housing of the heat conducting member.

According to this configuration, for example, the condensation water arising in the low temperature portion may be reserved in the concave portion. Therefore, for example, an effect of preventing deposition of condensation water on the light emitting element can be increased. Moreover, if the concave portion is a circular cross section, it can be easily formed by milling with a drill or the like.

Furthermore, one or more embodiments of the above-describe projector may be provided in a head-up display device.

According to this configuration, for example, in the head-up display device, the light emitting element may be cooled by the cooler via the heat conducting member. If condensation occurs on a portion of the heat conducting member on the inner side of the housing, condensation water may form on the low temperature portion. Because the low temperature portion does not contact the light emitting element, deposition of condensation water on the light emitting element of the head-up display device can be prevented.

### BRIEF DESCRIPTION OF THE DRAWINGS

FIG. 1 is a schematic diagram of a head-up display device according to one or more embodiments of a first example of the present invention.
FIG. 2 is a block diagram illustrating a configuration of a projector of the head-up display device according to one or more embodiments of a first example of the present invention.
FIG. 3 is an exploded perspective view of a housing of the projector according to one or more embodiments of a first example of the present invention.
FIG. 4 is a plane view of the housing of the projector according to one or more embodiments of a first example of the present invention.
FIG. 5 is a cross-sectional perspective view illustrating a configuration of the housing of the projector and a periphery thereof according to one or more embodiments of a first example of the present invention.
FIG. 6 is a partially enlarged cross-sectional perspective view illustrating a configuration around laser diodes of the housing of the projector according to one or more embodiments of a first example of the present invention.
FIG. 7 illustrates a tilt adjustment of the laser diodes in the partially enlarged cross-sectional perspective view illustrating the configuration around the laser diodes of the housing of the projector according to one or more embodiments of a first example of the present invention.
FIG. 8 illustrates the tilt adjustment of the laser diodes in the partially enlarged cross-sectional perspective view illustrating the configuration around the laser diodes of the housing of the projector according to one or more embodiments of a first example of the present invention.
FIG. 9 is a cross-sectional side view illustrating a configuration around the laser diodes and heating and cooling units of the housing of the projector according to one or more embodiments of a first example of the present invention.
FIG. 10 is a partially enlarged perspective view illustrating the configuration around the laser diodes and the heating and cooling units of the housing of the projector according to one or more embodiments of a first example of the present invention.
FIG. 11 is a partially enlarged perspective view illustrating a configuration around laser diodes and heating and cooling units of a housing of a projector according to one or more embodiments of a second example of the present invention.
FIG. 12 is a partially enlarged perspective view illustrating the configuration around the laser diodes and the heating and cooling units of the housing of the projector according to one or more embodiments of a second example of the present invention.
FIG. 13 is a cross-sectional side view illustrating a configuration around laser diodes and heating and cooling units of a housing of a projector according to one or more embodiments of a third example of the present invention.
FIG. 14 is a block diagram illustrating a configuration of a projector of a head-up display device according to one or more embodiments of a fourth example of the present invention.
FIG. 15 is an exploded perspective view of a housing of the projector according to one or more embodiments of a fourth example of the present invention.
FIG. 16 is a plane view of the housing of the projector according to one or more embodiments of a fourth example of the present invention.
FIG. 17 is a cross-sectional perspective view illustrating a configuration of the housing of the projector and a periphery thereof according to one or more embodiments of a fourth example of the present invention.
FIG. 18 is a partially enlarged cross-sectional perspective view illustrating a configuration around laser diodes of the housing of the projector according to one or more embodiments of a fourth example of the present invention.

### DETAILED DESCRIPTION

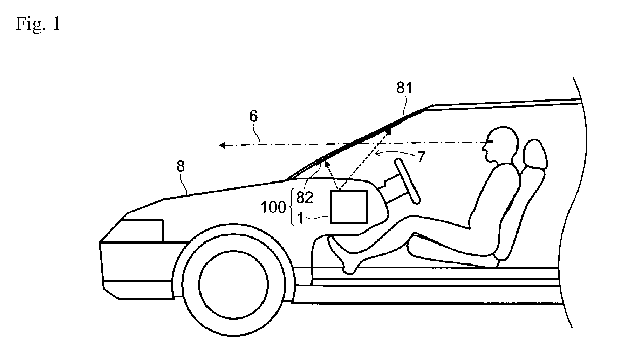

Embodiments of the present invention are described below with reference to FIGS. 1 to 13. The head-up display device is referred to below as an HUD device. In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

### (First Example)

An HUD device according to one or more embodiments of a first example of the present invention is described using FIG. 1. FIG. 1 is a schematic diagram of the HUD device.

As illustrated in FIG. 1, the HUD device 100 is mounted in a vehicle 9. The HUD device 100 is not limited for use in an automotive vehicle but may be mounted in other passenger vehicles (for examples, an aircraft or the like). The HUD device 100 is a display device that projects a scanning laser light 7 (projection light) from a projector 1 toward a windshield 81 and displays a projection image superimposed within a field of vision of a user. In FIG. 1, the arrow 6 of the dashed line illustrates a line of sight of the user seated in a driver's seat of the vehicle 8.

A combiner 82 formed using a semipermeable reflective material such as a half mirror, for example, is affixed on an inside surface of the windshield 81. A virtual image is formed in a predetermined region of the combiner 82 by projecting the scanning laser light 7 from the projector 1 to the combiner 82. For this reason, the user viewing a front direction of the vehicle (e.g., a direction of the line of sight 6) can simultaneously visually recognize an external image in front of the vehicle 8 and the projection image projected from the projector 1.

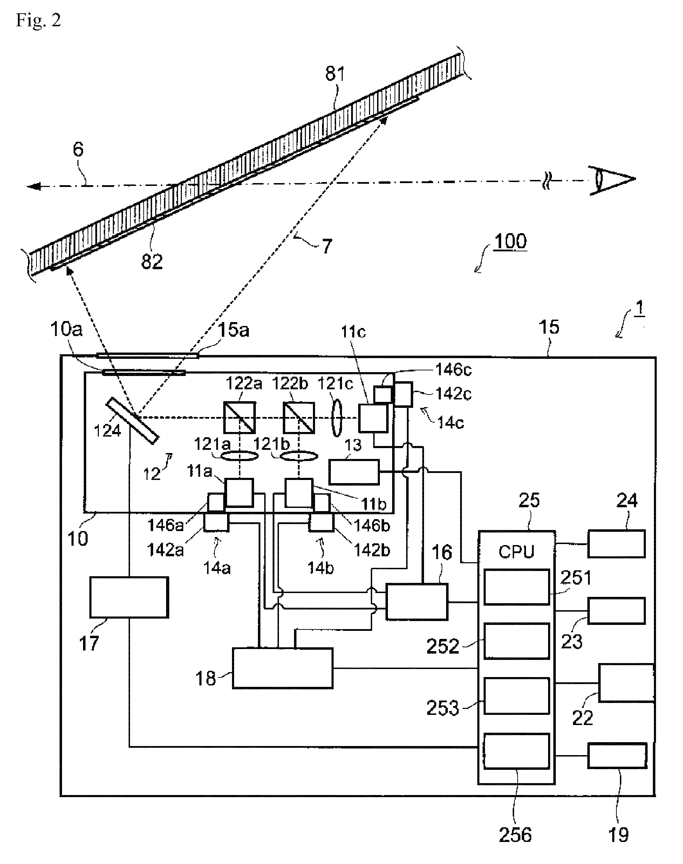

FIG. 2 is a block diagram illustrating one or more embodiments of a first example of the projector.

As illustrated in FIG. 2, the projector 1 provides a main body enclosure 15 that houses various types of configuring elements that configure the projector 1. A light emitting part or light source 15a for emitting the scanning laser light 7 is formed on the main body enclosure 15. The light emitting part 15a may be an opening or may be formed using, for example, glass, a translucent resin material, or the like. Forming the light emitting part 15a using glass may prevent intrusion of dust, moisture (for example, water droplets, air including moisture), and the like into the main body enclosure 15.

A housing (package) 10, laser diodes 11a to 11c having laser diodes (referred to as LDs below), an optical system 12, a thermistor 13, and heating and cooling units 14a to 14c are mounted inside the main body enclosure 15. Moreover, an LD driver 16, a mirror servo part 17, a Peltier element driver 18, a power source 19, an input and output I/F 22, a controller 23, a storage part 24, and a CPU 25 are provided inside the main body enclosure 15. Additionally, the projector 1 may also provide, for example, a voice output part such as a speaker.

The housing 10 is an airtight enclosure part mounted with the laser diodes 11a to 11c, the optical system 12, the thermistor 13, and the heating and cooling units 14a to 14c. Moreover, a window part 10a for emitting to the outside the scanning laser light 7 emitted from the optical system 12 and an opening (not illustrated) disposed with Peltier elements 142a to 142c described below are formed in the housing 10. The window part 10a is formed using, for example, glass, the translucent resin material, or the like.

The laser diode 11a may be a light emitting element that emits a blue laser light. The laser diode 11b may be a light emitting element that emits a green laser light. The laser diode 11c may be a light emitting element (LD) that emits a red laser light.

The optical system 12 comprises collimator lenses 121a to 121c, beam splitters 122a and 122b, and a MEMS (Micro Electro Mechanical System) mirror 124. Other optical elements such as a prism, a condensing lens, or the like may be suitably disposed in the optical system 12.

The collimator lenses 121 a to 121c are optical elements that convert the laser lights, which are light beams emitted from the laser diodes 11a to 11c, to parallel lights. The beam splitters 122a and 122b may be configured by, for example, dichroic mirrors. In this case, the beam splitters 122a and 122b become optical elements that reflect light of a predetermined wavelength and transmit light of other wavelengths. The beam splitter 122a reflects the blue laser light and transmits the red and green laser lights. The beam splitter 122b reflects the green laser light and transmits the red laser light. However, the beam splitter 122a and 122b may be configured by, for example, the half mirrors instead of the dichroic mirrors. The MEMS mirror 124 is an optical reflecting element that reflects the incident laser light of each color.

The MEMS mirror 124 can change a reflecting direction of the laser lights to a bi-axial direction. The scanning laser light 7 is emitted from the optical system 12 by the MEMS mirror 124 changing the reflecting direction of the laser lights. The scanning laser light 7 is emitted outside the main body enclosure 15 by passing through the window part 10a of the housing 10 and the light emitting part 15a of the main body enclosure 15 and is projected to the combiner 82 on the windshield 81.

The thermistor 13 is a temperature detecting part provided inside the housing 10 to measure environmental temperature around the laser diodes 11a to 11c. The temperature of the laser diodes 11a to 11c can be estimated from the temperature detected by the thermistor 13. In FIG. 2 one thermistor 13 is used to measure operation temperatures of the laser diodes 11a to 11c, but a plurality of thermistors 13 may be used to individually measure each of the operation temperatures of the laser diodes 11a to 11c.

The heating and cooling units 14a to 14c heat or cool the laser diodes 11a to 11c according to the temperature detected by the thermistor 13. The heating and cooling units 14a to 14c are configured to include the Peltier elements 142a to 142c, which are coolers, and heat transfer members 146a to 146c. The heat transfer members 146a to 146c are rectangular in shape and are formed using a material with higher thermal conductivity than the housing 10, such as, for example, Cu, Al, Au, a metal material of an alloy or the like that includes at least one of the materials above, or a ceramic material with high thermal conductivity.

The heat transfer members 146a to 146c are thermally connected between the laser diodes 11a to 11c and the Peltier elements 142a to 142c and pass heat. The Peltier elements 142a to 142c are thermoelectric elements using the Peltier effect and are elements that enable heating and cooling the laser diodes 11a to 11c. The projector 1 includes a heat radiating part for radiating heat generated by the Peltier elements 142a to 142b, but details of this are described below.

The LD driver 16 performs drive control of the LDs had by each of the laser diodes 11a to 11c. The LD driver 16 is provided to enable drive control relating to light emission, light output, and the like for each of the laser diodes 11a to 11c.

The mirror servo part 17 is a drive controller that controls the MEMS mirror 124. For example, the mirror servo part 17 drives the MEMS mirror 124 according to a horizontal synchronization signal from the CPU 25 and deflects a reflection direction of the laser light by the MEMS mirror 124 to a horizontal direction. Moreover, the mirror servo part 17 drives the MEMS mirror 124 according to a vertical synchronization signal from the CPU 25 and deflects the reflection direction of the laser light by the MEMS mirror 124 to a vertical direction.

The Peltier element driver 18 performs drive control of the Peltier elements 142a to 142c. The Peltier element driver 18 is provided to enable drive control of a heating operation and a cooling operation for the Peltier elements 142a to 142c. The Peltier element driver 18 includes a switching part for switching operations (heating operation, cooling operation, operation disabling, and the like) of the Peltier elements 142a to 142c. A field effect transistor (FET) or the like, for example, is used for the switching part.

The power source 19 receives supply of power from an electric power source such as, for example, a storage battery (not illustrated) of the vehicle 8. The power source 19 converts electrical power to a predetermined voltage corresponding to components of the projector 1 and supplies converted electrical power to the components. The input and output I/F 22 is a communication interface for wired communication or wireless communication with an external device. The controller 23 is an input unit that accepts operation inputs from the user.

The storage part 24 is a non-volatile storage medium that stores programs used by configuring elements of the projector 1 (for example, the CPU 25) and control information. Additionally, the storage part 24 also stores, for example, video information projected to the combiner 82. In FIG. 2 the storage part 24 is a separate component from the CPU 25, but the storage part 24 is not limited to this example and may be included in the CPU 25.

The CPU 25 is a controller that controls the components of the projector 1 using programs, control information, and the like stored in the storage part 24. The CPU 25 has a video processor 251, an LD controller 252, a heating and cooling controller 253, and a mirror controller 256.

The video processor 251 generates video information based on the programs stored in the storage part 24, information input from the input and output I/F 22, the information stored in the storage part 24, and the like. Moreover, the video processor 251 converts the generated video information to video data of three colors of red (R), green (G), and blue (B). The converted video data of three colors are output to the LD controller 252. The LD controller 252 generates and outputs to the LD driver 16 a light control signal for the laser diodes 11a to 11c based on the video data of three colors. The mirror controller 256 generates and outputs to the mirror servo part 17 a control signal for controlling the direction of the MEMS mirror based on the video information.

The heating and cooling controller 253 generates and outputs to the Peltier element driver 18 a control signal for performing drive control of the Peltier elements 142a to 142c based on, for example, information obtained from the thermistor 13 and the like.

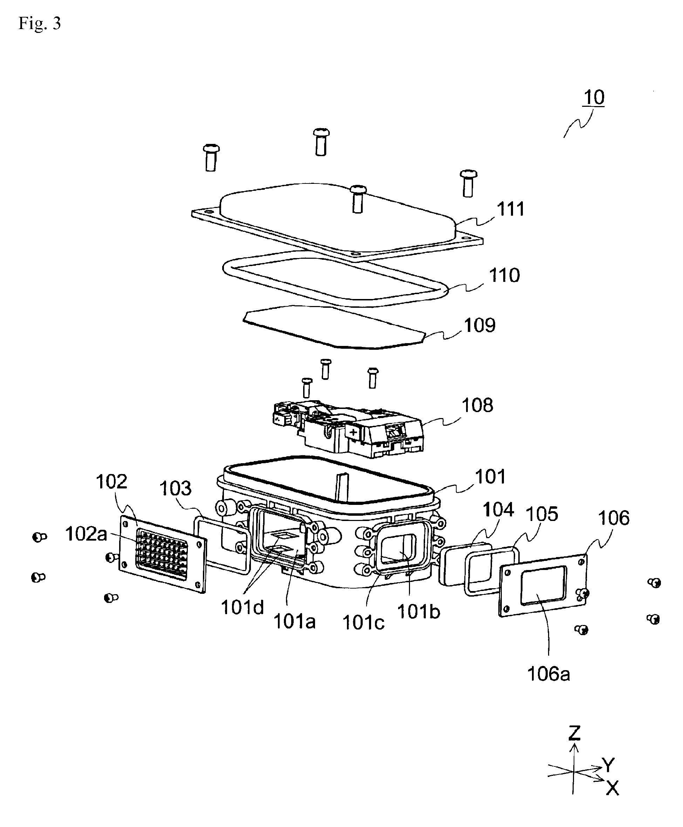

FIG. 3 is an exploded perspective view of the housing 10 according to one or more embodiments. As illustrated in FIG. 3, the housing 10 is provided with a case 101 and a cover 111.

The case 101 is a box-shaped member with a rectangular external shape. The case 101 is formed from, for example, a resin with low thermal conductivity. A first opening 101a is formed in a rectangular shape in a plane view on a central area of one of two side walls parallel to a longitudinal direction (the X direction in FIG. 3) of the case 101. A plurality of electrically connected terminals 102a provided in an electrically connected terminal part 102 is fitted into the opening 101a. Because of this, the electrically connected terminals 102a are exposed outside and inside the case 101, and an electric circuit inside and an electric circuit outside the case 101 can be electrically connected. The electrically connected terminal part 102 has a sealing member 103 (for example, an O ring) for ensuring air tightness in the housing 10 interposed therebetween and that an outer peripheral side thereof (a portion not provided with the electrically connected terminals 102a) is secured by screws to the side wall of the case 101.

A second opening 101b is formed in a rectangular shape in a plane view on the central area of one of the two side walls parallel to a lateral direction (the Y direction in FIG. 3) of the case 101. A wall 101c is erected on an outer surface side of the side wall on which the second opening 101b is formed so as to surround the second opening 101b, forming a recessed space. A glass window 104 is fitted into this recessed space so as to cover the second opening 101b. The window 104 may be configured from a material with high transmittance of visible light, and the configuring material thereof is not limited to glass. The window 104 is secured by a sealing member 105 (for example, an O ring or the like) for ensuring air tightness in the housing 10 and a window frame 106 formed with an opening 106 for transmitting light. The window frame 106 is secured by screws to the side wall of the case 101.

Three third openings 101d into which the three Peltier elements 142a to 142c are fitted are formed on a bottom wall of the case 101. In FIG. 3 only two third openings 101d are illustrated. The third openings 101d are provided toward one end portion in the longitudinal direction of the case 101 (a side opposite a side whereon the window 104 is provided). The three Peltier elements 142a to 142c are each rectangular in shape and are attached to the case 101 by being fitted to the third openings 101d. Fitting portions of the three Peltier elements 142a to 142c and the corresponding third openings 101d are sealed with an adhesive or the like. By this, the air tightness inside the housing 10 is ensured despite the presence of the third openings 101d.

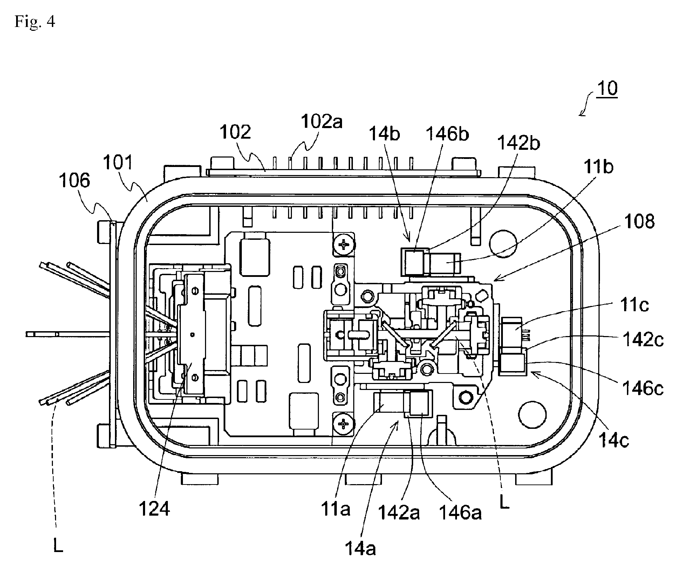

Three laser diodes 11a to 11c and an optical module 108 mounted with the optical system 12 are housed in the case 101. The optical module 108 is secured in the case 101 by, for example, screws. Here, FIG. 4 is a plane view of the housing 10 illustrating the optical module 108 housed in the case 101. According to FIG. 4, it is apparent that the electrically connected terminal part 102 and the window 104 are attached to the case 101. In FIG. 4 a laser light L is illustrated to facilitate the understanding of a configuration of the first example. Moreover, right and left are reversed for the housing 10 in FIGS. 3 and 4.

When the optical module 108 is housed in the case 101, thermal connections between the laser diodes 11a to 11c and the corresponding (see FIG. 2) Peltier elements 142a to 142c are configured to be obtained via the heat transfer members 146a to 146c. Moreover, an electric circuit configuring the laser diodes 11a to 11c and the MEMS mirror 124 is connected to the electrically connected terminals 102a.

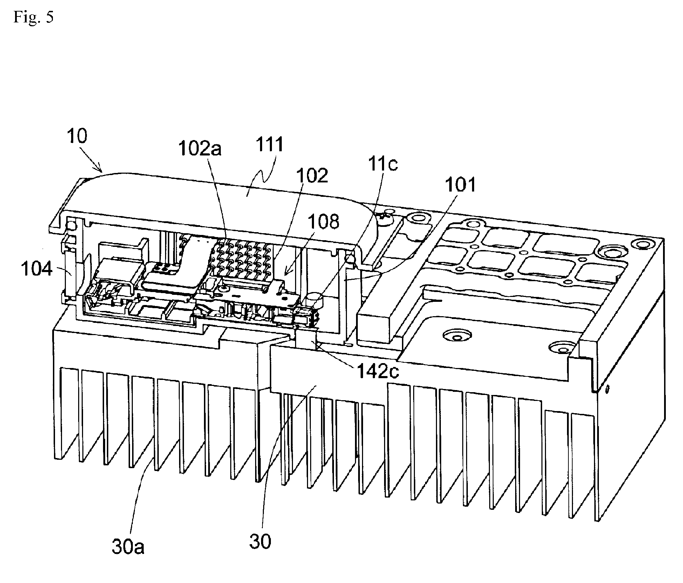

When the optical module 108 is housed in the case 101, the housing 10 storing the optical module 108 and the like is obtained by storing and covering with a cover 111 a reinforcing member 109 in the case 101. A sealing member 110 is interposed when covering with the cover 111 so as to ensure air tightness in the housing 10. The cover 111 may be of a configuration that is secured by screws to the case 101 or the like, but in one or more embodiments of the first example, the cover 111 is secured by screws to a separate member (frame member) as illustrated in FIG. 5 described below.

FIG. 5 is a cross-sectional perspective view illustrating a configuration of the housing 10 and the periphery thereof. Right and left are in the opposite directions for the housing 10 in FIGS. 3 and 5. As illustrated in FIG. 5, a radiating plate 30 provided with a large number of fins 30a on a lower surface side thereof is disposed on a lower portion side of the housing 10. The three Peltier elements 142a to 142c are disposed on an upper surface of the radiating plate 30. The three Peltier elements 142a to 142c are disposed to be thermally connected to the corresponding laser diodes 11a to 11c via the heat transfer members 146a to 146c (see FIGS. 2 and 4).

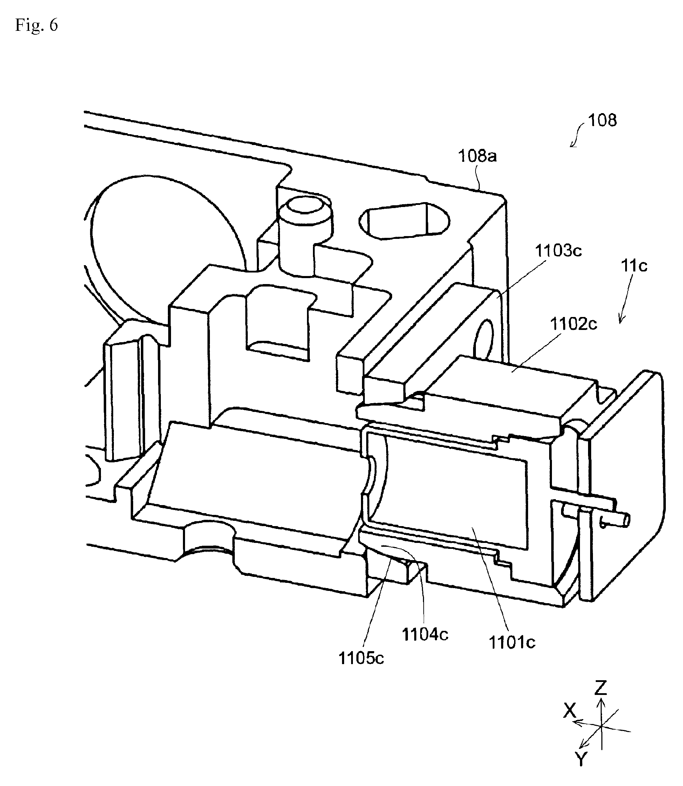

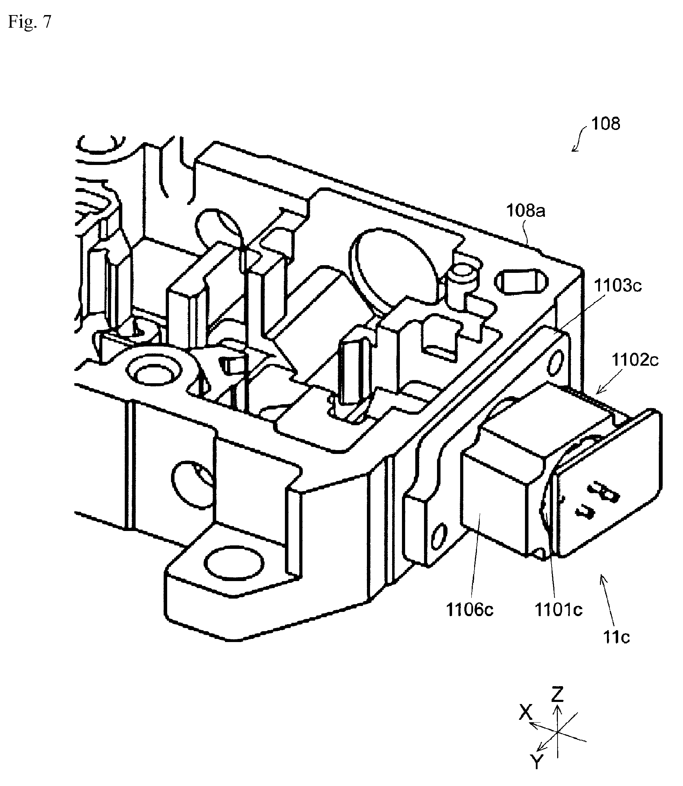

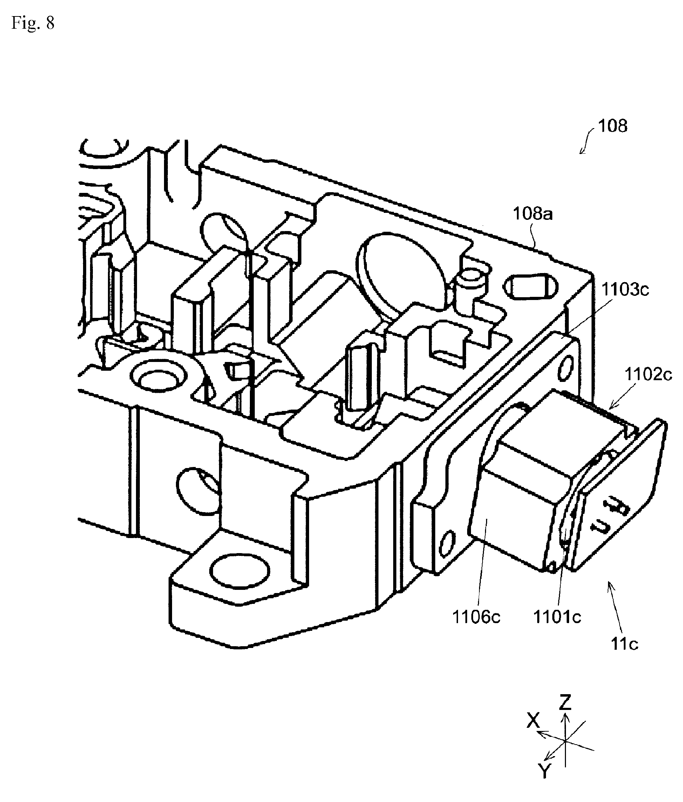

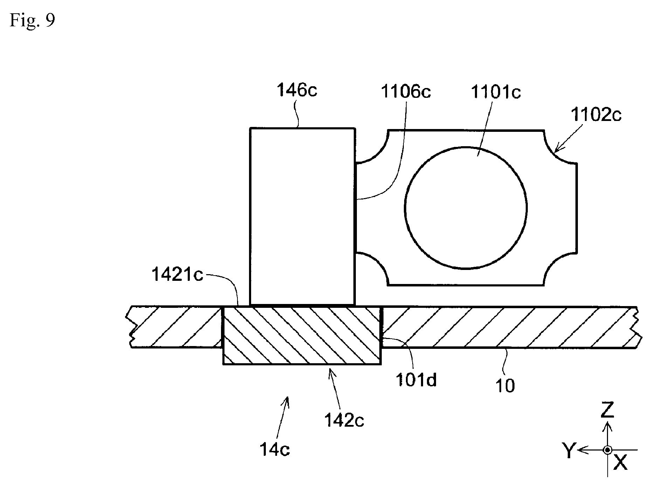

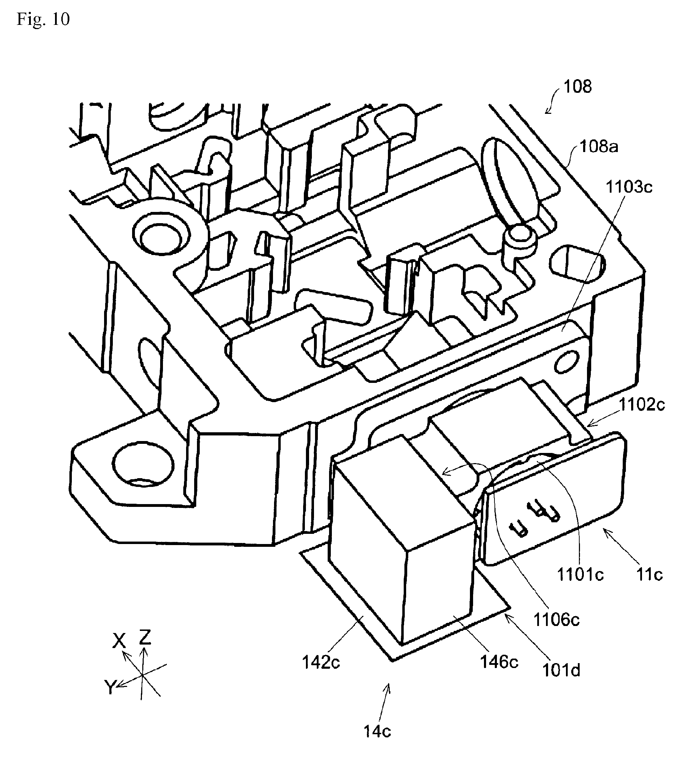

Next, a configuration around the laser diode 11c of the housing 10 will be described in detail using FIGS. 6 to 10. FIG. 6 is a partially enlarged cross-sectional perspective view illustrating the configuration around the laser diode 11c of the housing 10. FIGS. 7 and 8 illustrate a tilt adjustment of the laser diode 11c in a partially enlarged perspective view illustrating the configuration around the light source 11c. FIGS. 9 and 10 are a cross-sectional side view and a partially enlarged perspective view illustrating a configuration around the laser diode 11c and the heating and cooling unit 14c. FIG. 9 omits drawings of some components such as the optical module 108. Here, the laser diode 11c is used as an example to describe the configuration around the laser diode, but similar configurations exist around the laser diodes 11a, 11b.

As illustrated in FIG. 6, the laser diode 11c provides an LD 1101c, an LD holder 1102c, and an LD base 1103c.

The LD holder 1102c encapsulates and holds the cylindrical LD 1101c, and an external shape thereof is rectangular. Locations open in the LD holder 1102c corresponding to both ends in the axial direction of the LD 1101c, and through this opening, the LD 1101c is mounted to the LD holder 1102c and the laser light is emitted. The LD holder 1102c is provided with a protruding part 1104c where an end portion of the LD base 1103c side protrudes from a portion primarily forming the rectangular shape. A tip end of the protruding part 1104c has a spherical outer surface and is inserted into a through hole 1105c provided in the LD base 1103c.

The LD base 1103c is plate-like and is provided so a primary surface thereof touches a side surface of an enclosure 108a of the optical module 108. The LD base 1103c is provided with a circular through hole 1105c that can receive the protruding part 1104c of the LD holder 1102c. An inner surface of the through hole 1105c corresponds to the outer surface of the tip end of the protruding part 1104c to form a spherical shape. The LD base 1103c is interposed between the LD holder 1102c and the enclosure 108a by the protruding part 1104c being inserted in the through hole 1105c.

Here, when adjusting an optical axis of the LD 1101c, position adjustment in a two-dimensional direction (the Y and Z directions in FIG. 6) along the side surface of the enclosure 108a is performed by displacing the LD base 1103c relative to the side surface of the enclosure 108a. The so-called tilt (slope) adjustment of the optical axis of the LD 1101c is performed by sliding the LD holder 1102c to the location of the protruding part 1104c relative to the through hole 1105c to change the angle. Tilt adjustment of the laser diode 11c in a horizontal direction (around the Z axis) is illustrated in FIG. 7, and tilt adjustment of the laser diode 11c in the vertical direction (around the Y axis) is illustrated in FIG. 8. After optical axis adjustment of the LD 1101c is completed, the laser diode 11c is secured to the enclosure 108a using an adhesive or the like.

During tilt adjustment of the LD 1101c, the an angle change that rotates the LD holder 1102c around the optical axis (around the X axis in FIGS. 7 and 8) is not necessary, and adjustment in the horizontal direction (around the Z axis) illustrated in FIG. 7 and the adjustment in the vertical direction (around the Y axis) illustrated in FIG. 8 are sufficient. Because of this, a side surface 1106c that is an outer plane of the laser diode 11c is continuously perpendicular to the inner surface of the housing 10 no matter how the laser diode 11c is displaced due to position adjustment and tilt adjustment of the LD 1101c.

The Peltier element 142c, which is a cooler, is fitted to the opening 101d provided corresponding to the laser diode 11c as illustrated in FIGS. 9 and 10. The Peltier element 142c is provided in the housing 10 to face the inside of the housing 10 and has a cooling plane 1421c that cools to a lower temperature than the housing 10. The cooling plane 1421c is flush with the inner surface of the housing 10. The Peltier element 142c is square with, for example, the cooling plane 1421c being 12 mm square.

The heat transfer member 146c is rectangular in shape and is placed on the cooling plane 1421c of the Peltier element 142c. Moreover, a side surface of the heat transfer member 146c contacts the side surface 1106c of the LD holder 1102c of the laser diode 11c. In this manner, the heat transfer member 146c is thermally connected to the cooling plane 1421c of the Peltier element 142c and the side surface 1106c of the laser diode 11c by surface contact. Moreover, the heat transfer member 146c follows the displacement of the laser diode 11c accompanying optical axis adjustment of the LD 1101c to be in surface contact with and thermally connected to the cooling plane 1421c of the Peltier element 142c and the side surface 1106c of the laser diode 11c. Other members such as grease may be interposed between the laser diode 11c and the heat transfer member 146c and between the heat transfer member 146c and the Peltier element 142c.

The heat transfer member 146c is secured using an adhesive or the like while in surface contact with the cooling plane 1421c of the Peltier element 142c and the side surface 1106c of the laser diode 11c after optical axis adjustment of the LD 1101c is completed.

Because ofthis, the heat transfer member 146c is robbed of heat and cooled by the Peltier element 142c thermally connected to the housing 10 so as to face the inner side of the housing 10. Moreover, the heat transfer member 146c robs heat from and cools the laser diode 11c by being thermally connected to the laser diode 11c due to contact with the side surface 1106c.

As described above, the projector 1 provided by the HUD device 100 of one or more embodiments of the first example of the present invention is provided with the Peltier element 142c of the heating and cooling unit 14c that is provided in the housing 10 so as to face the inner side of the housing 10 and has the cooling plane 1421c that cools to a lower temperature than the housing 10; the laser diode 11c stored inside the housing 10 separated from the Peltier element 142c that emits the light beam, has the side surface 1106c that can adjust position and tilt of the optical axis and is always a fixed angle relative to the cooling plane 1421c of the Peltier element 142c despite displacement accompanying optical axis adjustment; and the heat transfer member 146c that follows displacement of the laser diode 11c accompanying optical axis adjustment of the LD 1101c to be in surface contact with and thermally connected to the cooling plane 1421c of the Peltier element 142c and the side surface 1106c of the laser diode 11c. Because of this, the laser diode 11c and the Peltier element 142c are in continuous surface contact with and are thermally connected to the heat transfer member 146c even if the laser diode 11c is displaced for optical axis adjustment. Therefore, forming the heat transfer member 146c from a material with comparatively high thermal conductivity such as metal and the like allows transfer of heat between the laser diode 11c of the projector 1 and the Peltier element 142c to be performed efficiently.

### (Second Example)

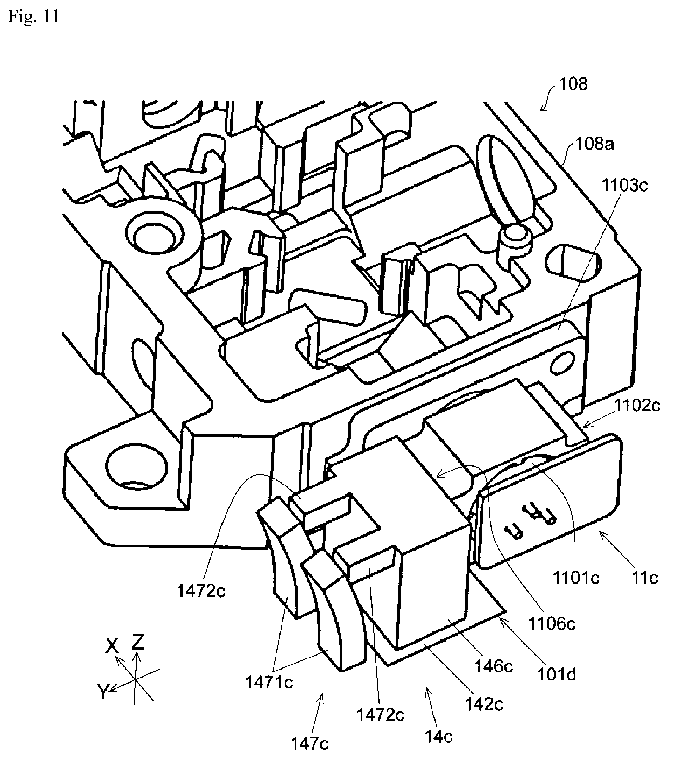

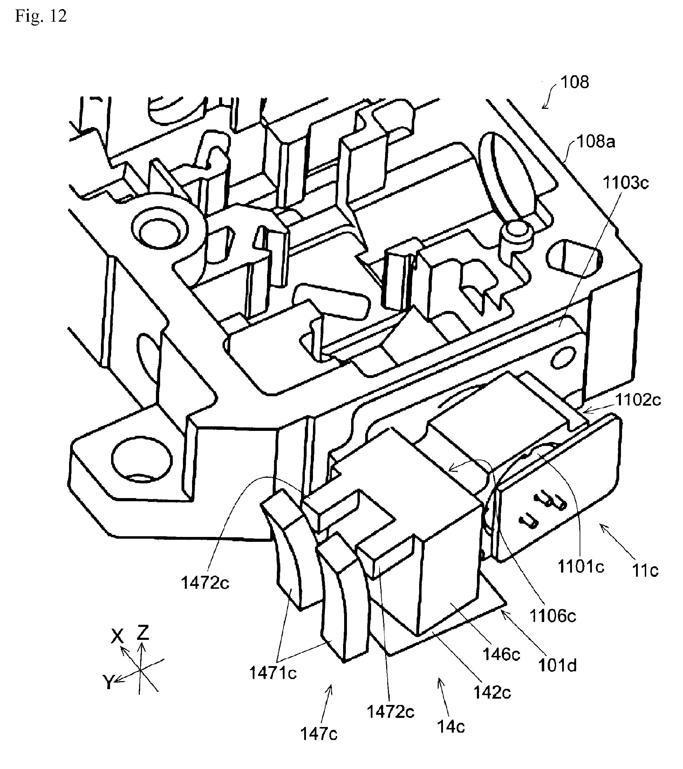

Next, a configuration of the HUD device according to one or more embodiments of a second example of the present invention will be described using FIGS. 11 and 12. FIGS. 11 and 12 are partially enlarged perspective views illustrating a configuration around a laser diode and a heating and cooling unit of a housing of a projector of the HUD device. Because the basic configuration of this second example may be similar to the first example described using FIGS. 1 to 10, the same reference numerals as before are attached to components held in common with the first example, and reference of the drawings and descriptions thereof are omitted.

A projector 1 is provided by the HUD device 100 according to one or more embodiments of the second example of one or more embodiments provides a heating and cooling unit 14c and a pressing unit 147c as illustrated in FIG. 11. The pressing unit 147c is provided between an inner surface of the housing 10 and the heat transfer member 146c. The pressing unit 147c is provided with springs 1471c and contact pieces 1472c.

Two springs 1471c are provided in locations across from the laser diode 11c inside the housing 10 with the heat transfer member 146c therebetween. The springs 1471c may have a prismatic shape that extends vertically by protruding toward an inner side from the inner surface of the housing 10. The springs 1471c may have a length that reaches a surface opposite a contact surface of the heat transfer member 146c that contacts a Peltier element 142c. The tip ends of the springs 1471c are free ends and are elastically displaceable.

The contact pieces 1472c are adjacent to the surface opposite the contact surface of the heat transfer member 146c that contacts the Peltier element 142c, and two are provided on the surface opposite the contact surface of the heat transfer member 146c that contacts the laser diode 11c. The contact pieces 1472c extend by protruding toward the springs 1471c in a manner parallel to the inner surface of the housing 10 mounted with the heat transfer member 146c, e.g., in a direction away from the laser diode 11c. The two contact pieces 1472c contact the tip ends of the corresponding springs 1471c against an elastic force of the springs 1471c. Because ofthis, the springs 1471c elastically deform in a direction away from the heat transfer member 146c. The heat transfer member 146c is then pushed toward the laser diode 11c, making surface contact with a side surface 1106c to be thermally connected.

Here, as illustrated in FIG. 12, during tilt adjustment in a horizontal direction of the laser diode 11c, the heat transfer member 146c follows a displacement of the laser diode 11c to be continuously in surface contact with the side surface 1106c of the laser diode 11c to be thermally connected because the heat transfer member 146c is pushed toward the laser diode 11c by the pressing unit 147c. Moreover, providing two pairs of the springs 1471c and the contact pieces 1472c improves a following property of the displacement of the laser diode 11c.

Although not illustrated, the same configuration of the springs 1471c and the contact pieces 1472c is also provided between an inner surface of a cover 111 and the heat transfer member 146c. By this configuration, the heat transfer member 146c is pushed toward the Peltier element 142c (the -Z direction in FIGS. 11 and 12) to continually be in surface contact with and thermally connected to a cooling plane 1421c.

Because the pressing unit 147c that pushes the heat transfer member 146c toward the laser diode 11c and the Peltier element 142c is provided in this manner, the heat transfer member 146c can heighten an effect of being in surface contact between the side surface 1106c of the laser diode 11c and the cooling plate 1421c of the Peltier element 142c. That is, thermal connectivity improves between the laser diode 11c and the Peltier element 142c. Therefore, efficiency of passing heat between the laser diode 11c and the Peltier element 142c can be further improved.

Furthermore, as described above, the pressing unit 147c is provided with the springs 1471c that are provided in locations across from the laser diode 11c inside the housing 10 with the heat transfer member 146c therebetween, protrude toward an inner side from the inner surface of the housing 10, and are elastically displaceable; and the contact pieces 1472c that are provided to the heat transfer member 146c, protrude toward the springs 1471c to contact the tip ends of the springs 1471c against the elastic force of the springs 1471 c, and elastically deform the springs 1471 c. According to this configuration, the effect of the heat transfer member 146c being in surface contact with the side surface 1106c of the laser diode 11c and the cooling plane 1421c of the Peltier element 142c is heightened in a simple and easy configuration. Therefore, efficiency of passing heat between the laser diode 11c and the Peltier element 142c can be easily improved.

Furthermore, providing two pairs of the springs 1471c and the contact pieces 1472c can improve a following property of the heat transfer member 146c relative to the displacement of the laser diode 11c that accompanies optical axis adjustment. Therefore, thermal connectivity also improves between the laser diode 11c and the Peltier element 142c. There may be one pair or three pairs or more of the springs 1471c and the contact pieces 1472c.

### (Third Example)

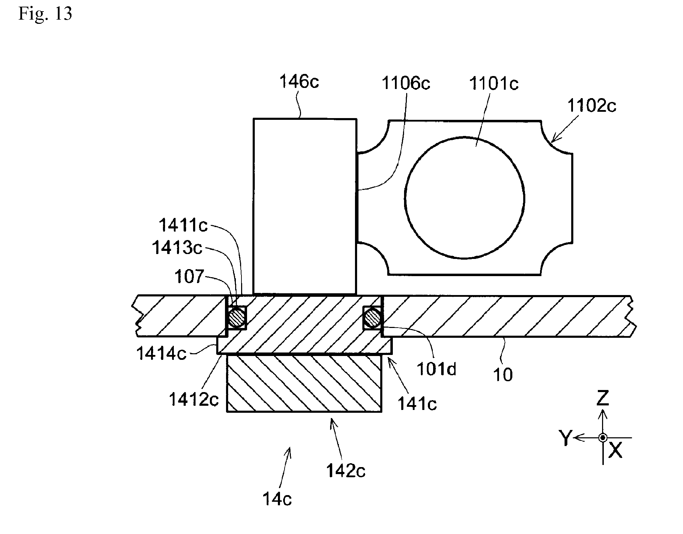

Next, a configuration of the HUD device according to one or more embodiments of a third example of the present invention will be described using FIG. 13. FIG. 13 is a cross-sectional side view illustrating a configuration around a laser diode and a heating and cooling unit of a housing of a projector of the HUD device. Because the basic configuration of the third example may be similar to the first example described using FIGS. 1 to 10, the same reference numerals as before are attached to components held in common with the first example, and reference of the drawings and descriptions thereof are omitted.

A projector 1 provided by the HUD device 100 according to one or more embodiments of the third example has a heating and cooling unit 14c provided with a thermal conduction member 141c as illustrated in FIG. 13. The thermal conduction member 141c is interposed between the Peltier element 142c and the heat transfer member 146c.

The thermal conduction member 141c has a cylindrical shape with a length in the axial direction (the Z direction in FIG. 13) shorter than a diameter thereof (length in the Y direction in FIG. 13). The thermal conduction member 141c contacts and thermally connects to the heat transfer member 146c at an inner end surface (cooling plane) 1411c of the cylindrical thermal conduction member 141c positioned on an inner side of the housing 10. The thermal conduction member 141c contacts and thermally connects to the Peltier element 142c at an outer end surface of the cylindrical thermal conduction member 141c positioned on an outer side of the housing 10, e.g., at an opposing surface 1412c from the Peltier element 142c. Other members such as grease may be interposed between the heat transfer member 146c and the thermal conduction member 141c and between the thermal conduction member 141c and the Peltier element 142c.

Because of this, the thermal conduction member 141c is robbed of heat and cooled by the Peltier element 142c that contacts from outside the housing 10. Moreover, the thermal conduction member 141c contacts the heat transfer member 146c at the inner end surface (cooling plane) 1411c and robs heat to cool the heat transfer member 146c. Moreover, the heat transfer member 146c contacts the laser diode 11c to rob heat and cools the laser diode 11c. The thermal conduction member 141c has, for example, a diameter of 12 mm and a thickness of 4.5 mm for the inner end surface 1411c.

The thermal conduction member 141c is provided with a sealing part 1413c and a flange part 1414c.

The sealing part 1413c is formed so a peripheral surface thereof has a shape constricted radially inward. The sealing part 1413c has a shape and a size that can house a sealing member 107 (for example, an O ring or the like). The thermal conduction member 141c is fitted to an opening 101d provided in the housing 10 via the sealing member 107.

The flange part 1414c is formed on an end portion of the thermal conduction member 141c corresponding to the outer side of the housing 10. A diameter of the flange 1414c is greater than a diameter of the opening 101d, preventing the thermal conduction member 141c from being inserted more than is needed on an inner side of the housing 10.

In this manner, the heating and cooling unit 14c provides the thermal conduction member 141c c that has the inner end surface 1411c, which is the cooling plane; and the Peltier element 142c that is disposed on an outer portion of the housing 10 so as to oppose the thermal conduction member 141c and that cools the thermal conduction member 141c from outside of the housing 10. According to this configuration, even if the heating and cooling unit 14c has a configuration that provides the thermal conduction member 141c and the Peltier element 142c, transfer of heat between the laser diode 11c and the Peltier element 142c can be performed efficiently.

Here, considering a laser module, the laser module may displace a laser diode that is a heating element for optical axis adjustment. Therefore, when the cooling configuration described above is used in the laser module, it cannot correspond to displacement of the laser diode, and there is a possibility that a large gap forms locally between the laser diode (heating element) and the cooler (heat sink). Therefore, there is generally a need for correspondence by, for example, filling this gap with large quantities of heat conducting grease. There is concern that the heat conducting grease has low thermal conductivity compared to metal materials and the like and cannot effectively cool the laser diode.

In that respect, according to the one or more embodiments described above, transfer of heat between the laser diode and a cooling unit thereof can be performed efficiently, enabling efficient cooling of the laser diode.

### (Fourth Example)

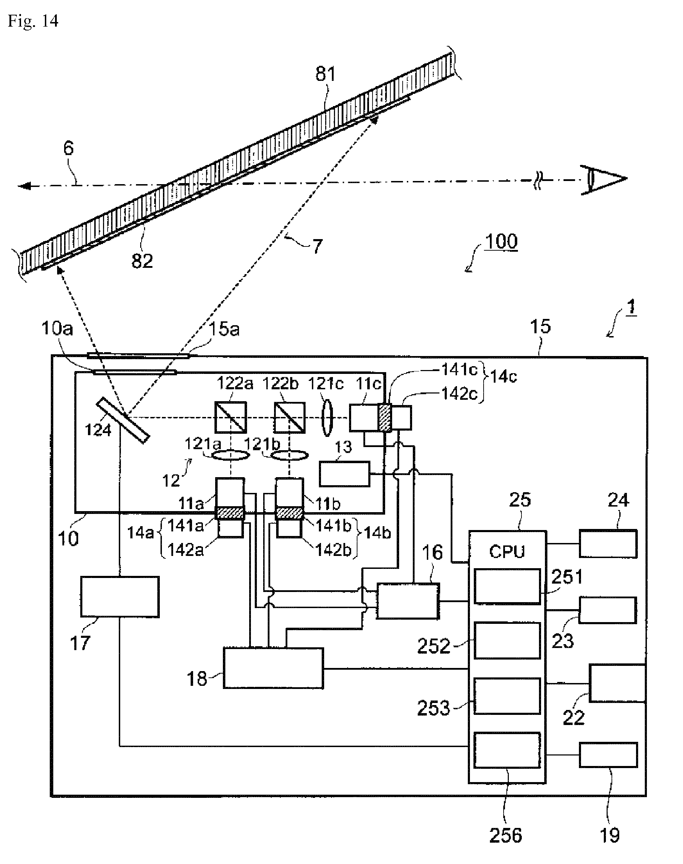

Next, the HUD device according to one or more embodiments of a fourth example of the present invention will be described using FIGS. 14 to 18. The fourth example will be described with emphasis on points different from the first example described above, and the same configurations and member numbers as the first example may be used for other configurations, omitting detailed descriptions thereof.

In FIG. 14, a housing 10 is an airtight enclosure part mounted with laser diodes 11a to 11c, an optical system 12, a thermistor 13, and heating and cooling units 14a to 14c. Moreover, a window part 10a for emitting to the outside a scanning laser light 7 emitted from the optical system 12 and an opening (not illustrated) disposed with heat conducting members 141a to 141c described below are formed in the housing 10. The window part 10a is formed using, for example, glass, a translucent resin material, or the like.

The heating and cooling units 14a to 14c heat or cool the laser diodes 11a to 11c according to the temperature detected by the thermistor 13. The heating and cooling units 14a to 14c are configured to include the heat conducting members 141 a to 141c and Peltier elements 142a to 142c, which are coolers. The heat conducting members 141 a to 141c are formed using a material with higher thermal conductivity than the housing 10, such as, for example, Cu, Al, Au, a metal material of an alloy or the like that includes at least one of these materials, or a ceramic material with high thermal conductivity.

The heat conducting members 141 a to 141c pass heat between the laser diodes 11a to 11c and the Peltier elements 142a to 142c. The Peltier elements 142a to 142c are thermoelectric elements using the Peltier effect and are elements that enable heating and cooling the laser diodes 11a to 11c. The projector 1 includes a heat radiating part for radiating heat generated by the Peltier elements 142a to 142b, but details of this are described below.

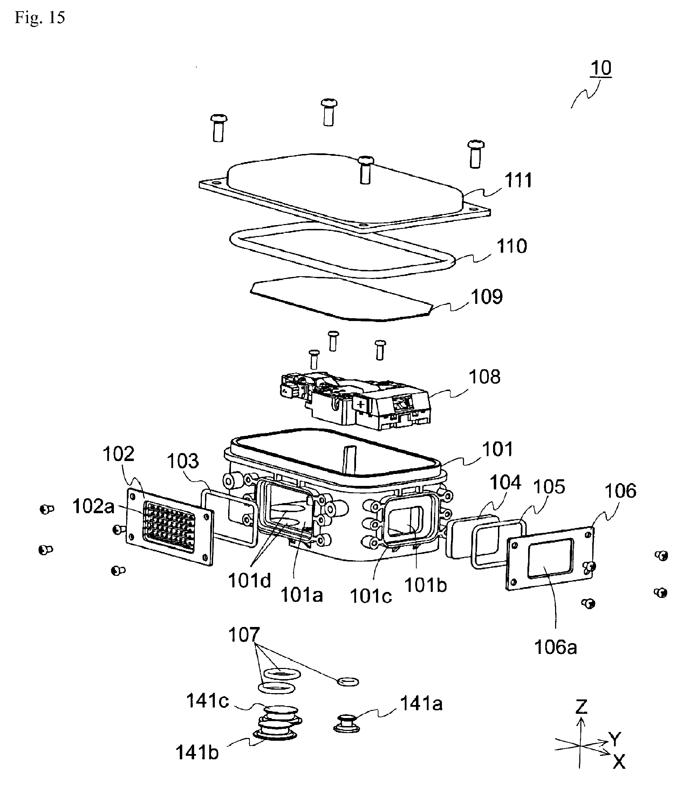

In FIG. 15, three third openings 101d into which three heat conducting members 141a to 141c are fitted are formed on a bottom wall of a case 101. In FIG. 15 only two third openings 101d are illustrated. The third openings 101d are provided toward one end portion in the longitudinal direction of the case 101 (a side opposite a side whereon the window 104 is provided). The three heat conducting members 141 a to 141c may have a peripheral surface in a shape constricted radially inward and are attached to the case 101 with a sealing member 107 (for example, O rings or the like) fitted thereto. Because of this, air tightness inside the housing 10 is ensured despite the presence of the third openings 101d.

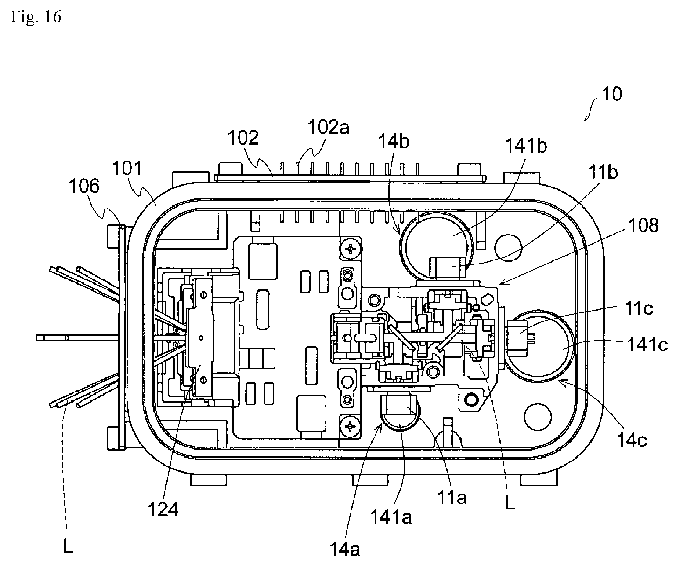

Three laser diodes 11a to 11c and an optical module 108 mounted with the optical system 12 are housed in the case 101. The optical module 108 is secured in the case 101 by, for example, screws. Here, FIG. 16 is a plane view of the housing 10 illustrating the optical module 108 being housed in the case 101. According to FIG. 16, it is apparent that an electrically connected terminal part 102 and the window 104 are attached to the case 101. In FIG. 16 a laser light L is illustrated to facilitate the understanding of the configuration of one or more embodiments of the fourth example. Moreover, right and left are in the opposite directions for the housing 10 in FIGS. 15 and 16.

Thermal connections between the laser diodes 11a to 11c and the corresponding (see FIG. 14) heat conducting members 141 a to 141c are configured to be obtained when the optical module 108 is housed in the case 101. Moreover, an electric circuit configuring the laser diodes 11a to 11c and a MEMS mirror 124 is connected to electrically connected terminals 102a.

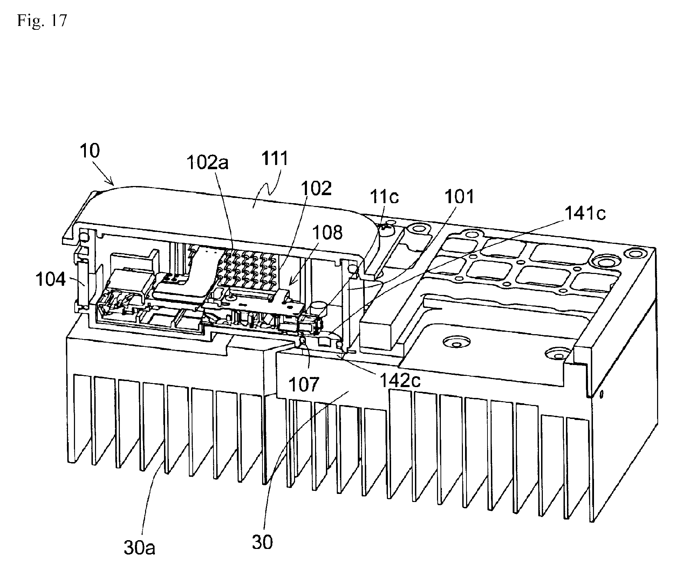

When the optical module 108 is housed in the case 101, the housing 10 storing the optical module 108 and the like is obtained by storing and covering with a cover 11 a reinforcing member 109 in the case 101. A sealing member 110 is interposed when covering with the cover 111 so as to ensure air tightness in the housing 10. The cover 111 may be of a configuration that is secured by screws to the case 101 or the like, but in the fourth example of one or more embodiments, the cover 111 is secured by screws to a separate member (frame member) as illustrated in FIG. 17 described below.

FIG. 17 is a cross-sectional perspective view illustrating a configuration of the housing 10 and the periphery thereof. Right and left are reversed for the housing 10 in FIGS. 15 and 17. As illustrated in FIG. 5, a radiating plate 30 provided with a large number of fins 30a on a lower surface side thereof is disposed on a lower portion side of the housing 10. The three Peltier elements 142a to 142c are disposed on an upper surface of the radiating plate 30. The three Peltier elements 142a to 142c are disposed to be thermally connected to a lower surface of the corresponding heat conducting members 141a to 141c (see FIG. 14).

Next, a configuration around the laser diode 11c of the housing 10 will be described in detail using

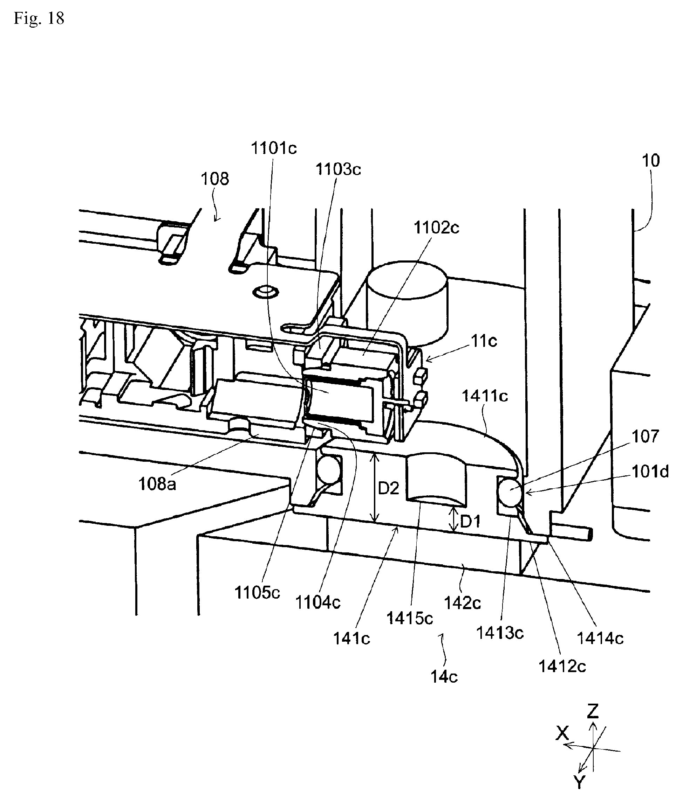

FIG. 6. FIG. 18 is a partially enlarged cross-sectional perspective view illustrating the configuration around the laser diode 11c of the housing 10. Here, the light source 11c is used as an example to describe the configuration around the laser diodes, but similar configurations exist around the laser diodes 11a, 11b.

As illustrated in FIG. 18, the laser diode 11c is provided with an LD 1101c, an LD holder 1102c, and an LD base 1103c.

The LD holder 1102c encapsulates and holds the cylindrical LD 1101c and an external shape thereof is rectangular. Locations open in the LD holder 1102c corresponding to both ends in the axial direction of the LD 1101c, and through this opening, the LD 1101c is mounted to the LD holder 1102c and the laser light is emitted. The LD holder 1102c is provided with a protruding part 1104c where an end portion of the LD base 1103c side protrudes from a portion primarily forming the rectangular shape. A tip end of the protruding part 1104c may have a spherical outer surface and is inserted into a through hole 1105c provided in the LD base 1103c.

The LD base 1103c is plate-like and is provided so a primary surface thereof touches a side surface of an enclosure 108a of the optical module 108. The LD base 1103c provides a circular through hole 1105c that can receive the protruding part 1104c of the LD holder 1102c. An inner surface of the through hole 1105c corresponds to the outer surface of the tip end of the protruding part 1104c to form a spherical shape. The LD base 1103c is interposed between the LD holder 1102c and the enclosure 108a by the protruding part 1104c being inserted in the through hole 1105c.

Here, when adjusting an optical axis of the LD 1101c, position adjustment in a two-dimensional direction (the Y and Z directions in FIG. 18) along the side surface of the enclosure 108a is performed by displacing the LD base 1103c relative to the side surface of the enclosure 108a. The so-called tilt (slope) adjustment of the optical axis of the LD 1101c is performed by sliding the LD holder 1102c to the location of the protruding part 1104c relative to the through hole 1105c to change the angle. After optical axis adjustment of the LD 1101c is completed, the light source 11c is is secured to the enclosure 108a using an adhesive or the like.

The Peltier element 142c, which is a cooler, is disposed on an outer portion of the housing 10 so as to oppose the heat conducting member 141c. The Peltier element 142c is square, with, for example, the surface opposite the heat conducting member 141c being 12 mm square and 2 mm thick.

The heat conducting member 141c may have a cylindrical shape with a length of an axial direction shorter than a diameter thereof. The heat conducting member 141c contacts and thermally connects to the LD holder 1102c of the laser diodes 11c at an inner end surface 1411c of the cylindrical heat conducting member 141c positioned on an inner side of the housing 10. The heat conducting member 141c contacts and thermally connects to the Peltier element 142c at an outer end surface of the cylindrical heat conducting member 141c positioned on an outer side of the housing 10, e.g., at an opposing surface 1412c from the Peltier element 142c. Other members such as grease may be interposed between the heat conducting member 141c and the laser diode 11c and between the heat conducting member 141c and the Peltier element 142c.

Because ofthis, the heat conducting member 141c is robbed of heat and cooled by the Peltier element 142c that is in contact and is thermally connected from outside the housing 10. Moreover, the heat conducting member 141c contacts the laser diode 11c that is thermally connected to rob heat and cools the laser diode 11c. The heat conducting member 141c may have, for example, a diameter of 12 mm and a thickness of 4.5 mm for the inner end surface 1411c.

The heat conducting member 141c provides a sealing part 1413c, a flange part 1414c, and a concave portion 1415c.

The sealing part 1413c is formed so its peripheral surface may have a shape constricted radially inward. The sealing part 1413c may have a shape and a size that can house a sealing member 107. The heat conducting member 141c is fitted to the opening 101d provided in the housing 10 via the sealing member 107.

The flange part 1414c is formed on an end portion of the heat conducting member 141c corresponding to the outside of the housing 10. A diameter of the flange 1414c is greater than a diameter of the opening 101d, preventing the heat conducting member 141c from being inserted more than is needed on an inner side of the housing 10.

The concave portion 1415c is formed as a concave portion recessed toward the opposing surface 1412c from the Peltier element 142c of the heat conducting member 141c from the inner end surface 1411c of the heat conducting member 141c positioned inside the housing 10. The concave portion 1415c is disposed in a location on the inner end surface 1411c of the heat conducting member 141c where the LD holder 1102c of the laser diode 11c is not in contact. The concave portion 1415c may have a bottomed cylindrical shape with, for example, a diameter of 4.5 mm and a depth of 3 mm.

As illustrated in FIG. 18, a distance D1 from the opposing surface 1412c from the Peltier element 142c of the heat conducting member 141c is shorter than a periphery of the concave portion 1415c, e.g., a distance D2 from the inner end surface 1411c of the heat conducting member 141c to the opposing surface 1412c. Because of this, the concave portion 1415c becomes a low temperature portion with a temperature locally lower than the inner end surface 1411c.

As described above, the projector 1 provided by the HUD device 100 according to the fourth example of one or more embodiments of the present invention provides the laser diode 11c that is housed in the housing 10 and that emits a light beam; the heat conducting member 141c formed from the material with higher thermal conductivity than the housing 10 that is fitted to the opening 101d provided in the housing 10 via the sealing member 107 and that is in contact with and thermally connected to the laser diode 11c at a portion positioned on the inner side of the housing 10; and the Peltier element 142c that is disposed on the outer portion of the housing 10 so as to oppose the heat conducting member 141c and that cools the heat conducting member 141c from outside the housing 10. The heat conducting member 141c may have the concave portion 1415c on the inner side of the housing 10 that does not contact the laser diode 11c and is a low temperature portion with a temperature locally lower than the periphery. Because of this, the housing 10 is sealed by a simple and easy configuration that fits the heat conducting member 141c to the opening 101d of the housing via the sealing member 107. The laser diode 11c is then cooled by the Peltier element 142c via the heat conducting member 141 c. Even if condensation occurs on a portion of the heat conducting member 141c on the inner side of the housing 10, condensation water forms on the concave portion 1415c. Because the concave portion 1415c does not contact the laser diode 11c, deposition of condensation water on the laser diode 11c of the projector 1 can be prevented.

Furthermore, the distance D1 from the opposing surface 1412c from the Peltier element 142c of the heat conducting member 141c is shorter than the periphery of the concave portion 1415c, e.g., the distance D2 from the inner end surface 1411c to the opposing surface 1412c. Because of this, thermal resistance decreases for a portion of the concave portion 1415c and temperature easily becomes lower locally compared to the inner end surface 1411c. Therefore, it becomes possible to more easily condensate the portion of the concave portion 1415c than the inner end surface 1411c.

Furthermore, the concave portion 1415c is formed as the concave portion recessed toward the opposing surface 1412c from the Peltier element 142c of the heat conducting member 141c from the inner end surface 1411c of the heat conducting member 141c positioned inside the housing 10. Because of this, the condensation water arising in the concave portion 1415c is reserved in the concave portion 1415c. Therefore, an effect of preventing deposition of condensation water on the laser diode 11c can be increased. Moreover, because the concave portion 1415c is a circular cross section, it can be easily formed by milling with a drill or the like.

Here, a conventional optical module may firmly bond members of a housing such as a side surface plate, a bottom surface plate, or a lid by brazing or adhesion to seal the housing (package). Because of this, there is concern that custom boding devices or jigs are needed, and it is possible that many working hours are needed. Therefore, there is concern that the optical module cannot be manufactured efficiently.

In that respect, according to one or more embodiments of the fourth example described above, deposition of condensation water to optical module parts can be prevented by a simple and easy configuration and it becomes possible to effectively cool the laser diodes.

The heat conducting members 141 a to 141c described in one or more embodiments of the fourth example of one or more embodiments may be used in a configuration that combines them with the heat transfer members 142a to 142c or may be used alone without combining them with the heat transfer members.

One or more embodiments of the present invention are described above, but the scope of the present invention is not limited thereto and can be implemented with various modifications without departing from the spirit of the invention.

For example, in the one or more embodiments above, the Peltier elements are used as coolers to cool the laser diodes via the heat conducting members, but the coolers are not limited to the Peltier elements and may be a blast fan or the like.

The present invention is applicable in a projector and head-up display device according to one or more embodiments.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

### Explanation of Reference Numerals

1 Projector
10 Housing
11a, 11b, 11c Laser diodes
14a, 14b, 14c Heating and cooling units (cooling units)
100 Head-up display (HUD) device
108 Optical module
141c Thermal conduction member
142a, 142b, 142c Peltier elements (coolers)
146a, 146b, 146c Heat transfer members
147c Pressing unit
1106c Side surface (outer plane)
1411c Inner end surface (cooling plane)
1421c Cooling plane
1471c Spring
1472c Contact piece

## Claims

1. A projector (1) comprising:
a cooling unit (14a, 14b, 14c) that is disposed so as to face an inner side of a housing (10) and that comprises a cooling plane (1421c) configured to cool to a temperature lower than the housing (10);
a light emitting element (11a, 11b, 11c) that is disposed in the housing (10), configured to emit a light beam, that enables an adjustment of a position and a tilt of an optical axis, and that comprises an outer plane where an angle relative to the cooling plane of the cooling unit is fixed even when displaced by the adjustment; and
a heat transfer member (146a, 146b, 146c) that is in surface contact with and thermally connected to the cooling plane (1421c) of the cooling unit (14a, 14b, 14c) and the outer plane of the light emitting element (11a, 11b, 11c).

2. The projector (1) according to claim 1, wherein the light emitting element (11a, 11b, 11c) is a laser diode.

3. The projector (1) according to claim 1, wherein the cooling unit (14a, 14b, 14c) comprises a Peltier element (142a, 142b, 142c).

4. The projector (1) according to claim 1, further comprising:
a pressing unit (147c) configured to press the heat transfer member (146a, 146b, 146c) toward the light emitting element (11a, 11b, 11c).

5. The projector (1) according to claim 4, wherein the pressing unit (147c) comprises:
a spring (1471c) that is disposed across from the light emitting element (11a, 11b, 11c) inside the housing (10) with the heat transfer member (146a, 146b, 146c) therebetween and that can elastically displace by protruding toward the inner side from an inner surface of the housing (10); and
a contact piece (1472c) disposed on the heat transfer member (146a, 146b, 146c), that protrudes toward and contacts the spring (1471c).

6. The projector (1) according to claim 5, wherein the pressing unit (147c) comprises a plurality of pairs of springs and contact pieces.

7. The projector (1) according to claim 3, wherein the cooling unit (14a, 14b, 14c) further comprises:
a heat conducting member (141c) having the cooling plane (1421c), wherein the Peltier element (142a, 142b, 142c) cools the heat conducting member from outside the housing (10).

8. A projector (1) comprising:
a cooling unit (14a, 14b, 14c) that is disposed so as to face an inner side of a housing (10) and that comprises a cooling plane (1421c) that cools to a temperature lower than the housing (10);
a light emitting element (11a, 11b, 11c) that is disposed in the housing (10), configured to emit a light beam, that enables an adjustment of a position and a tilt of an optical axis, and that comprises an outer plane where an angle relative to the cooling plane of the cooling unit is fixed even when displaced by the adjustment;
a heat transfer member (146a, 146b, 146c); and
a heat conducting member (141c) that is disposed in an opening in the housing (10) via a sealing member, that connects thermally to the light emitting element at a portion positioned on an inner side of the housing (10), and that is formed from a material with higher thermal conductivity than the housing (10), wherein
the heat conducting member (141c) is thermally connected to the light emitting element (11a, 11b, 11c) and formed from a material with higher thermal conductivity than the housing (10), and
the heat conducting member (141c) has a low temperature portion positioned on the inner side of the housing (10) having a locally lower temperature.

9. The projector (1) according to claim 8, wherein
a distance from the low temperature portion to an opposing surface of a Peltier element (142a, 142b, 142c) is shorter than a distance to an opposing surface of a periphery of the housing (10).

10. The projector (1) according to claim 9, wherein
the low temperature portion is formed by a concave portion recessed toward the opposing surface of the Peltier element (142a, 142b, 142c) from a surface positioned on the inner side of the housing (10) of the heat conducting member (141c).

11. A head-up display device (100) comprising a projector according any precedent claims.
